# EUROPEAN PATENT SPECIFICATION

(11) **EP 4 642 009 B1**
(45) Date of publication and mention of the grant of the patent: **01.04.2026**
(21) Application number: 24172504.3
(22) Date of filing: 25.04.2024
(51) Int. Cl.: H04L 67/12, H04W 4/90

(54) **METHODS, COMPUTER PROGRAMS, AND APPARATUSES FOR USER EQUIPMENT AND A NETWORK NODE, FOR DETECTING DUPLICATE/REDUNDANT WARNING MESSAGES, AND FOR GENERATING A WARNING MESSAGE, MOBILE COMMUNICATION SYSTEM**
VERFAHREN, COMPUTERPROGRAMME UND GERÄTE FÜR TEILNEHMERGERÄTE UND NETZWERKKNOTEN
PROCÉDÉ, PROGRAMME ET APPAREILS POUR ÉQUIPEMENT UTILISATEUR ET NOEUD DE RÉSEAU, POUR DÉTECTER DES MESSAGES D'AVERTISSEMENT DOUBLES/REDONDANTS

(43) Date of publication of application: 29.10.2025
(73) Proprietor: Deutsche Telekom AG, 53113 Bonn (DE)
(72) Inventor: LAUSTER, Reinhard, 3100 St. Pölten (AT)
(74) Representative: 2SPL Patentanwälte PartG mbB

(56) References cited:
- US-A1- 2020 127 749
- GABOR BAJKO (NOKIA): "EAS retrieval", IEEE DRAFT; 11-10-0164-00-000U-EAS-RETRIEVAL, IEEE-SA MENTOR, PISCATAWAY, NJ USA, vol. 802.11u, 21 January 2010 (2010-01-21), pages 1 - 2, XP017677605

## Description

### Field

Examples relate to methods, computer programs, and apparatuses for user equipment, UE, and for a network node, for detecting duplicate warning messages, and for generating a warning message, and to a mobile communication system, more particularly, but not exclusively, to a concept for detecting duplicate warning messages at user equipment to avoid repetitive user notifications.

### Background

Mobile communication systems have revolutionized the way we connect with others and access information on the go. These systems enable users to communicate through voice calls, text messages, and internet services using mobile devices such as smartphones and tablets. With the advancements in technology, mobile communication systems have become faster, more reliable, and accessible to a larger population worldwide.

A Public Warning System (PWS) is a broadcast system based on 3GPP (3rd Generation Partnership Project) technologies and standards which allow sending different kinds of warning messages via radio cell broadcast to a UE (user equipment). PWS is potentially working on all available technologies (2G (2^{nd} Generation mobile communication system), 3G, 4G, 5G, 6G, etc.) and is designed to alert and inform the public about potential or imminent threats to their safety. It is typically used during emergencies or disasters to disseminate important information and instructions to the general public.

Additionally, also ETWS (Earthquake and Tsunami Warning System) is a specific feature within the 3GPP standards that also focuses on providing early warning messages to UEs in the event of an earthquake or tsunami. ETWS is designed to enhance public safety by quickly disseminating critical information to individuals who may be affected by these natural disasters.

Duplicated messages received on UEs cause annoying multiple duplicate alarming/notifying of the user. This problem occurs if the user equipment receives broadcast from overlapping cells belonging to different PLMNs (Public Land Mobile Network), users belonging to different virtual network operators and/or which are using national roaming or different flavors of network and radio sharing (e.g. MOCN (Multi Operator Core Network), MORAN (Multi Operator Radio access Network), 5G Slicing, etc.).

Document GABOR BAJKO (NOKIA): "EAS retrieval", IEEE DRAFT;, IEEE-SA MENTOR, PISCATAWAY, NJ USA, vol. 802.11u, 21 January 2010 (2010-01-21), pages 1-2, describes the interworking procedures for Emergency Alert System (EAS) support within an IEEE 802.11 infrastructure, outlining how Access Points (APs) and non-AP Stations (STAs) interact to deliver emergency alerts. When EAS operation is enabled (as indicated by the dotllEASEnabled flag), an AP advertises the availability of an EAS message by including an Emergency Alert Identifier element - containing an Alert Identifier Hash computed using the HMAC-SHA1-64 algorithm - in its Beacon and Probe Response frames. This hash value, uniformly calculated across all APs within and across Extended Service Sets (ESSs), enables non-AP STAs to determine whether a received EAS message is new or has already been downloaded, thereby avoiding duplicate notifications. Additionally, the document details the retrieval process for EAS messages by non-AP STAs, which may occur through either non-native or native GAS (Generic Access Service) query procedures, with the latter involving the construction of an EAS Message URI (Uniform Resource Identifier) by appending the hexadecimal representation of the hash to a provided Emergency Alert Server URI. Finally, it specifies that upon expiration of an EAS message, the AP must remove the corresponding identifier from its transmissions, ensuring that only current alerts are broadcast.

### Summary

It is a finding of the present disclosure that each warning message has a serial number (assigned by a PW emergency agency) and the UE compares serial numbers (standardized). However, the serial number is not unique and hence it is a finding that the UE would have to compare the content of messages to detect duplicates. But this is from a 3GPP standard perspective not mandatory and therefore not implemented in the products (i.e. UEs). Additionally, the serial number might not be synchronized in some deployment scenarios, or it may be reused for updates of the messages. Therefore, same content with different serial numbers is shown to the user when no content comparison is done at all but only serial number comparison. It is a further finding that duplicate warning messages can be detected using a hash value or signature value that is based on specific parts of its content. To prevent duplicated PWS messages and enable a fast and efficient detection at the UE a hash value can be created from PWS content. A UE can compare hash values very fast and delete duplicated PWS messages or at least avoid duplicate user notifications or alarms. Hash values can be efficiently determined and/or compared by processing components, such as processors, and require less memory space than complete messages. It is a further finding that such a hash value can be calculated or received and stored by the UE when receiving a message. The hash value may be calculated and broadcast by the cell (base station, gNB, NodeB, access point, etc.), which sends out PWS message, or it may be calculated and send out by a PWS sender/center. The hash value could even replace serial numbers.

Examples provide a method for user equipment, UE, of a mobile communication system and for detecting duplicate and/or redundant warning messages. The method comprises receiving a first warning message using the mobile communication system, determining a first hash value for the first warning message, wherein the first hash value is determined based on a specific message content of the first message. The method further comprises storing for the first warning message information about the first hash value in a memory and issuing a user notification about the first warning message. The method further comprises receiving a second warning message using the mobile communication system or another mobile communication system and determining a second hash value for the second warning message. The second hash value is determined based on a specific message content of the second message. The method further comprises storing for the second warning message information about the second hash value in a memory and refraining from issuing a user notification about the second warning message if the second hash value equals the first hash value. In examples the hash values or a comparison thereof may serve as duplicate detection indicator.

Examples may detect a duplicated content of the first message in the second message based on the first and second hash values, which is enabled using content-based hash values. For example, the first hash value is part of the first warning message and the second hash value is part of the second warning message. In some examples the hash values may be provided with the messages enabling efficient comparison at the UE. Additionally or alternatively, the first hash value may be calculated based on a specific content of the first warning message and the second hash value may be calculated based on a specific content of the second warning message. Example may hence enable an efficient verification means at the UE. Furthermore, the specific content may relate to specific content fields in the first and second warning messages. Hence, the content fields or a subset thereof may be used for calculation of the hash value enabling an efficient content comparison mechanism.

The first and second warning messages may comprise different message identifications. Examples may enable content comparison of messages with different identifications using the content-based hash values. In further examples the method comprises issuing the user notification about the second warning message if the first hash value differs from the second hash value. Hence, if messages with different contents are received the user receives multiple notifications.

In further examples the first warning message may further comprise validity period information and the refraining is performed during the validity period. Hence, after the validity period a second notification for message with the same content/hash value may be issued again. Additionally or alternatively, the first warning message may comprise network validity information and the refraining is performed from other networks listed in the network validity information. Hence, the first message may indicate from which other networks the duplicates may be detected and hence provide control over the duplicate detection. The first warning message and/or the second warning message may comprise repetition allowance information and the refraining might not be performed if repetition is allowed. Hence, if repetition of user notification for the same message content is allowed, it can be signaled in the message and then be considered at the UE. The notifications for the same content/hash value may then be carried out as indicated in the message. Prevention of repetitive notifications or control of repetitive user notification may be configurable, e.g. using information provided with the message.

Examples also provide a method for a network node, e.g. a core or radio network node, and for generating a warning message. The method comprises composing the warning message based on a plurality of pieces of content information and calculating a hash value based at least on a subset of the plurality of pieces of content information. The method further comprises adding the hash value to the message and forwarding the message to warning message recipients. The network node may hence calculate the hash value and include it in the message. For example, the hash value may be stored at the network node for later use.

In some examples the method may further comprise adding to the warning message one or more elements of the group of message type information, validity period information, network validity information, a unique disaster identification, and repetition allowance period information in line with the above. The composing may further comprise using a language independent translation model to align message content for different countries. The message, its content respectively, may use a universal language or encoding enabling to derive the same hash values for content of messages received from networks of different countries.

Another example is a computer program having a program code for performing one of the methods described herein, when the computer program is executed on a computer, a processor, or a programmable hardware component. Another example is an apparatus for user equipment of a mobile communication system. The apparatus comprises one or more interfaces configured to communicate in the mobile communication system and one or more processing devices configured to perform one of the methods for the UE as described herein. Yet another example is an apparatus for a network node. The apparatus comprises one or more interfaces configured to communicate in a network and one or more processing devices configured to perform one of the methods for the network node as described herein.

A mobile communication system comprising UE with an apparatus for a UE as described above and a network node with an apparatus for a network node station as described above is another example.

### Brief description of the Figures

Some examples of apparatuses, methods, and/or computer programs will be described in the following by way of example only, and with reference to the accompanying figures, in which
Fig. 1 shows a block diagram of an example of a method for user equipment;
Fig. 2 shows a block diagram of an example of a method for a network node;
Fig. 3 shows block diagrams of examples of an apparatus for user equipment, user equipment, an apparatus for a network node, a network node, and a mobile communication system;
Fig. 4 shows a message sequence chart of an emergency broadcast request in an example; and
Fig. 5 shows a table with potential message information elements.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

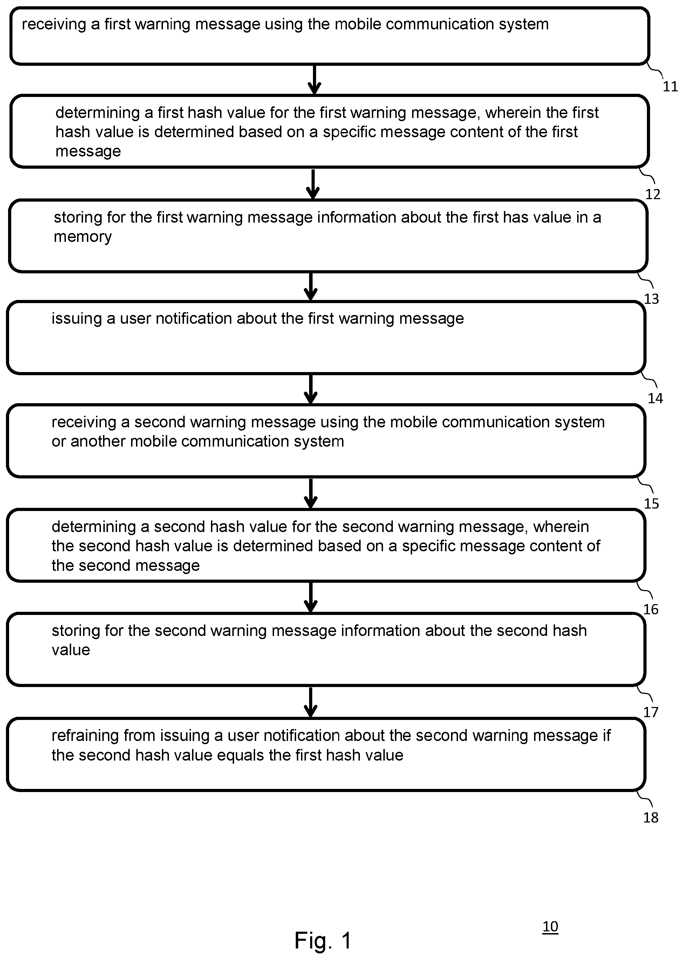

Fig. 1 shows a block diagram of an example of a method 10 for user equipment of a mobile communication system. The method 10 for detecting duplicate and/or warning messages comprises receiving 11 a first warning message using the mobile communication system, determining 12 a first hash value for the first warning message, wherein the first hash value is determined based on a specific message content of the first message. The method 10 comprises storing 13 for the first warning message information about the first hash value in a memory, and issuing 14 a user notification about the first warning message. The method 10 further comprises receiving 15 a second warning message using the mobile communication system or another mobile communication system. The method 10 comprises determining 16 a second hash value for the second warning message, wherein the second hash value is determined based on a specific message content of the second warning message. The method 10 further comprises storing 17 for the second warning message information about the second hash value. The method 10 further comprises refraining 18 from issuing a user notification about the second warning message if the second hash value equals the first hash value. In some examples the method 10 may further comprise detecting a duplicated content of the first message in the second message based on the first and second hash values. The method 10 may further comprise issuing the user notification about the second warning message if the first hash value differs from the second hash value. Hence, if the hash values do not match, the message contents are different and therefore the user is notified on both messages.

In examples a warning message may be a message that alerts the user of a critical situation or event, e.g. a natural disaster or a danger. Such messages may use predefined information, e.g. in terms of predefined information elements, and/or individual information, e.g. textual, audio or video information that may be presented at a receiver of the message. The presentation to a user may be performed by means of user notification, e.g. using haptic, acoustic or visual alerts to attract a user's attention and subsequent message presentation, e.g. display or replay. A duplicate and/or redundant message is a message than contains the same essential content as a previous message. For example, a message received from a different network may use a different identification and/or source address but it may still refer to the same warning, e.g. the same incident and would therefore still be considered to be a duplicate as it contains redundant warning information.

Such warning messages may be received from one or more mobile communication systems, e.g. using different operators, countries, access technologies, frequency bands, or even media. When determining a hash value from content, a hash function is applied to the content to generate a fixed-size output known as the hash value. This hash value can be thought of as a unique identifier or signature value for the content, as even a small change in the content will result in a significantly different hash value. Hash functions are designed to efficiently map data of arbitrary size to a fixed-size output, allowing for easy comparison and verification of content integrity.

There are various hash functions available, each with its own characteristics and strengths. Common hash functions include MD5 (Message Digest 5), SHA-1 (Secure Hash Algorithm), and SHA-256 (384, 512), among others. These hash functions are designed to be fast and reliable, producing unique hash values for different content. By using a well-known hash function, the reliability and security of the hash value can be assured, making it a useful tool for content comparison.

The process of determining a hash value from content involves taking the input data and passing it through the selected hash function. The resulting hash value is typically represented as a hexadecimal number, providing a compact and easily readable representation of the content. This hash value can then be used to compare files or message content, duplicate content detection, respectively.

The hash values may be determined on the fly or stored. For example, the information about the second hash value may be stored in the same or a different memory as the information about the first hash value. Information about the hash value in the present description may be any information that allows a retrieval or reconstruction of the hash value. For example, the actual value may be stored or the message content, which forms the basis for recalculating a hash value. In examples, information about multiple hash values and/or warning messages may be determined and stored.

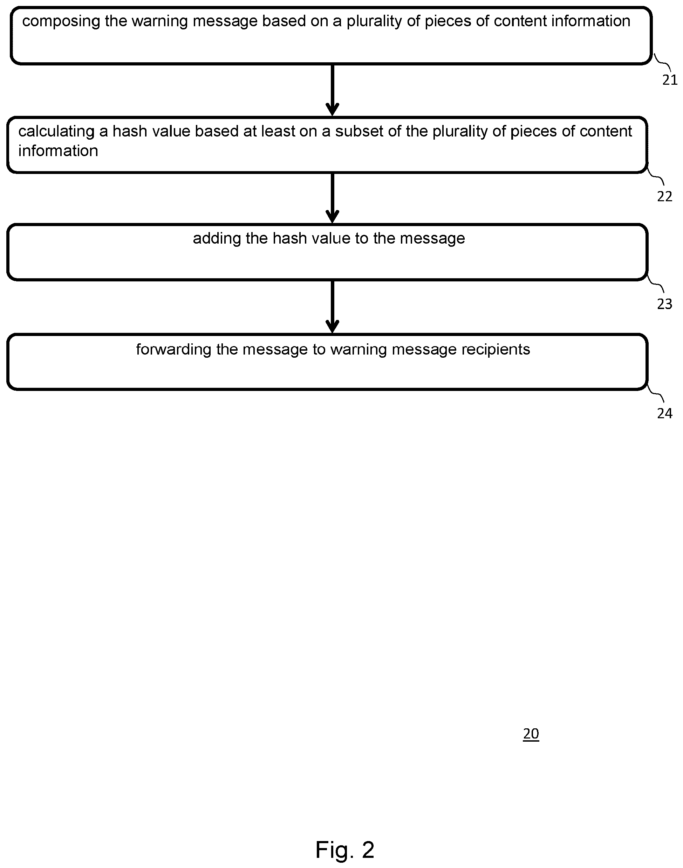

Fig. 2 shows a block diagram of an example of a method 20 for a network node and for generating a warning message. The method 20 comprises composing 21 the warning message based on a plurality of pieces of content information and calculating 22 a hash value based at least on a subset of the plurality of pieces of content information. The method 20 further comprises adding 23 the hash value to the message and forwarding 24 the message to warning message recipients.

Composing 21 the warning message may include generating a message header (control information, addresses, type, etc.) and message content. The message content may be composed of one or more predefined and/or undefined fields carrying message content. As will be detailed subsequently a standard may define a catalogue of fields and value sets to select from. A subset of one or more of these content fields may form the basis for the hash value determination. Optionally, the hash value may be stored at the network node in a memory.

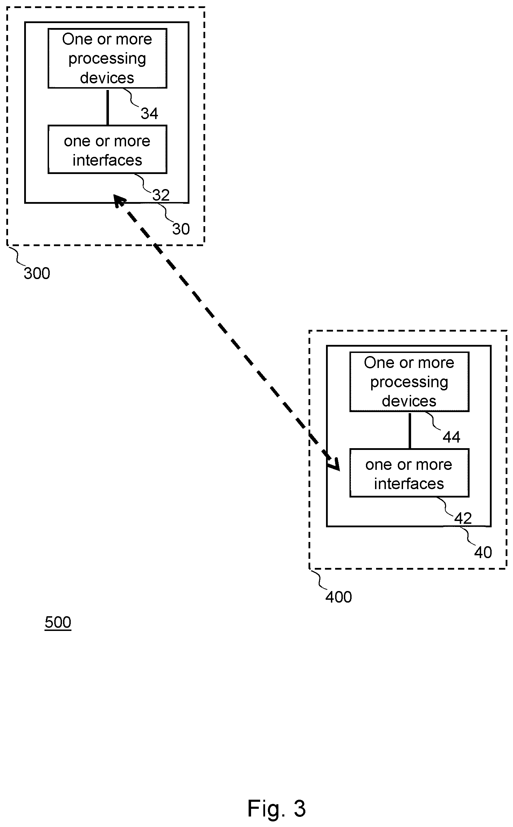

Fig. 3 shows block diagrams of examples of an apparatus 30 for user equipment 300, user equipment 300, an apparatus 40 for a network node 400, a network node 400, and a mobile communication system 500. The apparatus 30 for the user equipment 300 of the mobile communication system 500 comprises one or more interfaces 32 configured to communicate in the mobile communication system 500 and/or in other mobile communication systems. The one or more interfaces 32 are coupled to one or more processing devices 34, which are configured to perform one of the methods 10 for the user equipment as described herein. Likewise, Fig. 3 shows an example of user equipment 300 comprising the apparatus 30. From the perspective of the apparatus 30 the user equipment 300 is optional and therefore shown in dashed lines in Fig. 3.

The apparatus 40 for the network node 400 comprises one or more interfaces 42 configured to communicate in a network, e.g. in a core network of a mobile communication system or another network. The one or more interfaces 42 are coupled to one or more processing devices 44, which are configured to perform one of the methods 20 for the network node. Likewise, Fig. 3 shows an example of a network node 400 comprising the apparatus 40. From the perspective of the apparatus 40 the network node 400 is optional and therefore shown in dashed lines in Fig. 3. Another example is a mobile communication system 500 comprising user equipment 300 with an apparatus 30 and a network node 400 with an apparatus 40.

As illustrated in Fig. 3, the respective one or more processing devices 34, 44 are coupled to the respective one or more interfaces 32, 42. The one or more interfaces 32, 42 may correspond to one or more inputs and/or outputs for receiving and/or transmitting information, which may be in digital (bit) values according to a specified code or protocol, within a module, between modules or between modules of different entities. For example, an interface 32, 42 may comprise interface circuitry configured to receive and/or transmit information. In examples an interface 32, 42 may correspond to any means for obtaining, receiving, transmitting or providing analog or digital signals or information, e.g., any connector, contact, pin, register, input port, output port, conductor, lane, etc., which allows providing or obtaining a signal or information. An interface 32, 42 may be configured to communicate (transmit, receive, or both) in a wireless or wireline manner and it may be configured to communicate, i.e., transmit and/or receive signals, information with further internal or external components. The one or more interfaces 32, 42 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices 34, 44 may be implemented using one or more processing units, one or more circuitries, any means for processing, such as a processor, a computer or a programmable hardware component being operable with accordingly adapted software. In other words, the described function of the one or more processing devices 34, 44 may as well be implemented in software, which is then executed on one or more programmable hardware components. Such hardware components may comprise a general-purpose processor, a Digital Signal Processor (DSP), a micro-controller, etc.

In examples UEs, mobile terminals, or communication devices, may communicate in the mobile communication system with the network node, e.g., one or more cells generated by a base station/network node. For example, the communication device and the network entity may communicate in/via a mobile communication system. The mobile communication system may comprise a plurality of transmission points and/or base stations operable to communicate radio signals with the communication device.

A network entity, e.g., the network node, can be located in the fixed or stationary part of the network or system. The network node may be a core network node or a radio network node. A network node may correspond to a remote radio head, a transmission point, an access point, a macro cell, a small cell, a micro cell, a pico cell, a femto cell, a met-ro cell etc. A network node can be a wireless interface of a wired network, which enables transmission and reception of radio signals to a communication device. Such a radio signal may comply with radio signals as, for example, standardized by 3GPP or, generally, in line with one or more of the above listed systems. Thus, a network node or a base station may correspond to a NodeB, an eNodeB, an ngNB, a BTS (Base Transceiver Station), an access point, etc. In other examples the network node may be located in the core network (CN) of a mobile communication system or even outside the mobile communication system, e.g. in a central entity for issuing warning messages in case of emergency.

The mobile communication system may be cellular. The term cell refers to a coverage area of radio services provided by a transmission point, a remote unit, a remote head, a remote radio head, communication device, network entity or a NodeB, an eNodeB, an ngNB, respectively. The terms cell and base station may be used synonymously, a base station may generate multiple cells. A wireless communication device, e.g., user equipment, can be registered or associated with at least one cell (e.g., the network entity), e.g., it can be associated to a cell such that data can be exchanged between the network and the mobile in the coverage area of the associated cell using a dedicated channel, connection or link.

In general, user equipment may be a communication device that is capable of communicating wirelessly. In particular, however, the communication device may be a mobile communication device, e.g., a communication device that is suitable for being carried around by a user. For example, the communication device may be a User Terminal (UT) or User Equipment (UE) within the meaning of the respective communication standards being used for mobile communication. For example, the UE may be a mobile phone, such as a smartphone, or another type of mobile communication device, such as a smartwatch, a laptop computer, a tablet computer, or autonomous augmented-reality glasses. For example, the communication device and the network entity may be configured to communicate in a cellular mobile communication system. Accordingly, the communication device and the network entity may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the UE and the network node may be configured to communicate warning messages from the network node to the UE in a mobile communication system/cellular mobile communication system.

In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6^{th} Generation system (6G), a 5th Generation system (5G), a New Radio (NR) system, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

For example, PWS may vary depending on the country or region, but it generally includes a combination of the following elements:
- Alerting infrastructure: This includes warning sirens, loudspeakers, text messaging, mobile apps, social media platforms, and other communication channels that can reach a wide audience.
- Warning messages: These messages are carefully crafted to provide clear and concise information about the nature of the threat, recommended actions, and any specific instructions or guidelines that the public should follow.
- Emergency management agencies: The PWS is typically managed and operated by government agencies responsible for emergency management at the national, state, or local level. These agencies coordinate the dissemination of warnings and ensure that the information provided is accurate and up-to-date.

3GPP specifications related to the Public Warning System (PWS) are in 3GPP TS 22.268 (e.g. 3GPP TS 22.268 V18.3.0 (2023-06)) and 3GPP TS 22.273 (e.g. 3GPP TS 22.273 V7.1.0 (2008-03)). These technical specifications define the stage one description of the Public Warning System (PWS) requirements. It covers the core requirements for the PWS that are necessary to provide a complete service. Also, 3GPP standards provides the necessary guidelines and specifications for implementing PWS functionality.

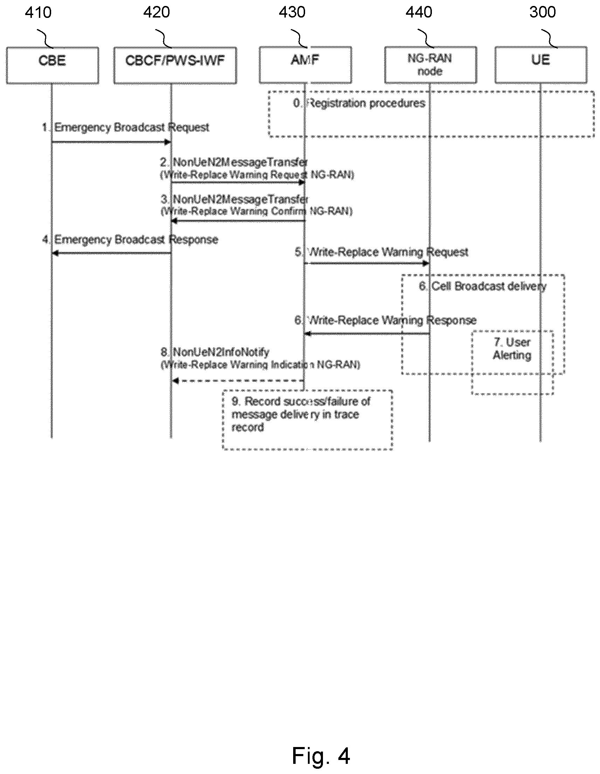

An example of 3GPP architecture for 5G is shown in Fig. 4. Fig. 4 shows a message sequence chart of an emergency broadcast request in an example. Fig. 4 illustrates from left to right, a Cell Broadcast Entity (CBE) 410, a Cell Broadcast Center Function/Public Warning System Interworking Function (CBCF/PWS-IWF) 420, an Access and Mobility Management Function (AMF) 430, a Next-Generation-Radio Access Network node (NG-RAN) 440 and a UE 300. After initial registration procedure (optional step 0) an Emergency Broadcast Request is sent from the CBE 410 to the CBCF/PWS-IWF 420 (step 1). The CBCF/PWS-IWF 420 then sends a request for a non-UE specific message transfer via an N2 interface to the AMF 430 (step2). The AMF 430 confirms the request in step 3 to the CBCF/PWS-IWF, which in turn answers to the CBE 410 with an Emergency Broadcast Response in step 4. The AMF 430 then sends a Warning Request to the NG-RAN node 440 in step 5, which triggers a cell broadcast and a warning response in step 6. The user is then alerted in step 7. The AMF then notifies the CBCF/PWS-IWF 420 in step 8 and may record success or failure of the message delivery in a trace record in step 9.

The content of a Public Warning System (PWS) alert message may vary depending on the specific requirements and implementation of the system in a particular country or region. However, here is an example of the typical content that may be included in a PWS alert message:
Header:
   - Alert Type: Indicates the type of alert, such as "Emergency Alert" or "Public Warning."
   - Alert Level: Specifies the severity level of the alert, such as "Extreme," "Severe," or "Moderate. "
   - Alert Time: Provides the timestamp of when the alert was issued.
Event Information:
   - Event Type: Describes the nature of the event, such as "Earthquake," "Tsunami," "Severe Weather," or "Civil Emergency."
   - Event Location: Specifies the affected geographic area or region.
   - Event Description: Provides a brief description of the event and its potential impact.
Recommended Actions:
   - Evacuation Instructions: Provides guidance on evacuation routes, assembly points, and safe locations.
   - Protective Actions: Advises individuals on protective measures to take, such as seeking shelter, staying indoors, or moving to higher ground.
   - Emergency Contacts: Provides relevant emergency contact numbers or websites for further assistance.
Additional Information:
   - Source: Indicates the authority or organization issuing the alert.
   - Validity Period: Specifies the duration of the alert's validity.
   - Language: Indicates the language in which the alert is communicated.

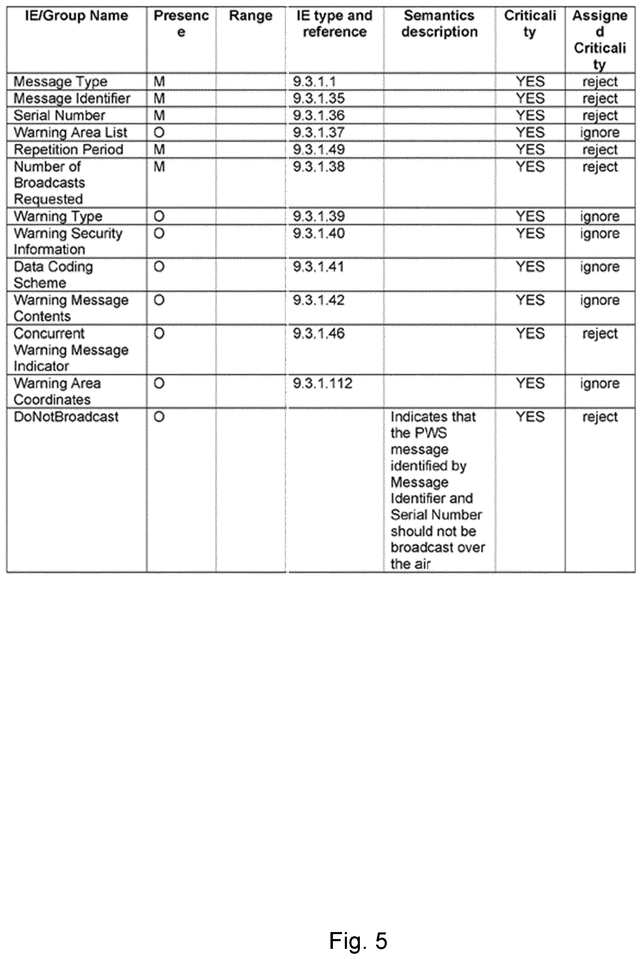

Reference is also made to related 3GPP TS 38.413 (3GPP TS 38.413 V18.1.0 (2024-03)). Fig. 5 shows a table with potential message information elements from this specification. The table shows multiple information elements that can be part of the message, cf. section 9.2.8.1 in TS 38.413. The first column indicates the name of the information element, and the second column indicates whether its presence is mandatory (M) or optional (O). The third column may specify a value range of the respective information element. The fourth column references further description in 38.413, the fifth column indicates the criticality, and the sixth column indicates the assigned criticality. In the NGAP messages (NG Application Protocol, NG is the reference point between the access and the core network) there is criticality information set for individual IEs and/or IE groups. This criticality information instructs the receiver how to act when receiving an IE or an IE group that is not comprehended, i.e., the entire item (IE or IE group) which is not (fully or partially) comprehended shall be treated in accordance with its own criticality information as specified in subclause 10.3.4.

It's important to understand that the actual content and format of a PWS alert message may vary depending on the specific system and country.

To prevent duplicated PWS messages and enable a fast and efficient detection of duplicated messages at the UE, a hash value is created and send together with the PWS message to the UE. For example, radio node, a core network node, a new centralized functionality, or an emergency agency may calculate and add the hash value to the PWS message. Alternatively, the UE may calculate the hash value based on received message content.

For example, the first hash value is part of the first warning message and the second hash value is part of the second warning message received at the UE. Alternatively, the first hash value is calculated based on a specific content of the first warning message and the second hash value is calculated based on a specific content of the second warning message. The specific content may relate to specific content fields in the first and second warning messages.

In some examples, for the hash calculation only emergency case related information to identify duplicated messages related to a specific disaster is considered like:
- Alert/Message Type;
- Warning message content;
- A validity period for the hash value;
- Optional a unique disaster ID (network based assigned by reg. authority centralized)
- Optional a repetition allowance, which allows reseeding same content (network based assigned by reg. authority centralized).

Although the first and second message may have the same content they may comprise different message identifications. For example, the first and second messages steam from different networks. Optionally, a new disaster identification (ID) may be added to the message content, which may serve as hash value. Moreover, the first warning message may further comprise validity period information and the refraining is performed during the validity period. The validity period would then determine a time span relative to the reception of the first message or relative to another time reference (e.g. a clock, Global Positioning System time reference, system frame numbers, etc.) during which the refraining is performed, i.e. during which no notification about duplicate messages are provided to the user. The first warning message may further comprise network validity information and the refraining is performed from other networks listed in the network validity information. Hence, the first message may specify one or more other networks for which duplicated warning messages are detected and user notification is refrained from. Furthermore, at least in some examples the user may delete stored hash value after a period of time, e.g. after a validity period has expired.

The first warning message and/or the second warning message may further comprise repetition allowance information and the refraining is not performed if repetition is allowed. Hence, a number of repeated user notifications for the same message content may be controlled using repetition allowance information.

On the side of the network node, which composes a warning message, the corresponding information elements may be added in line with the above-described method 20. The method 20 may comprise adding to the warning message one or more elements of the group of message type information, validity period information, network validity information, a unique disaster identification, and repetition allowance information. Furthermore, the composing may comprises using a language independent translation model to align message content for different countries. To avoid content differences because of different languages used, a language independent content may be used or standardized. Additionally, a language independent hash value creation may be applied in examples, e.g. using a common (standardized) translation model to align and compare content of neighboring countries.

For example, the hash value is calculated and stored by the UE when receiving a PWS message. Optionally the hash value is calculated by:
- the Radio network part cell which sends out PWS message (calculation and broadcasted);
- a PWS emergency center included in messages send out;
- a hash value can also replace serial numbers of PWS messages;
- a hash value can also be language independent - e.g. first translation of the emergency message in a "common" language and this can be the basis of the hash calculation.

With such a hash value, the UE can very fast compare hash values and delete duplicated PWS messages. Examples may hence provide a public warning system alarm duplication prevention.

For example, a UE can remove duplicated PWS messages based on the hash value and/or stop notification of the user. A UE may calculate and store hash values per received PWS message for a certain time period. Alternatively, the hash values may be calculated by broadcasting radio equipment, e.g. RAN parts like gNB, and added to the broadcast message. The network may calculate a hash value on a specific new function where all PWS emergency agencies are connected (e.g. also from neighboring countries). For example, the PWS emergency agency centers may calculate a hash value. By using a common (standardized) translation model a hash value may be created independent of country specific languages (and/or parameter settings). A central authority or centralized network function may assign a new unique disaster **ID** and/or repetition allowance for hash value determination/calculation.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for user equipment, UE (300), of a mobile communication system (500) and for detecting duplicate and/or redundant warning messages, the method (10) comprising
receiving (11) a first warning message using the mobile communication system (500);
determining (12) a first hash value for the first warning message, wherein the first hash value is determined based on a specific message content of the first message;
storing (13) for the first warning message information about the first hash value in a memory;
issuing (14) a user notification about the first warning message;
receiving (15) a second warning message using the mobile communication system (500) or another mobile communication system;
determining (16) a second hash value for the second warning message, wherein the second hash value is determined based on a specific message content of the second warning message;
storing (17) for the second warning message information about the second hash value;
refraining (18) from issuing a user notification about the second warning message if the second hash value equals the first hash value,
wherein the first warning message further comprises validity period information and wherein the refraining (18) is performed during the validity period.

2. The method (10) of claim 1, further comprising detecting a duplicated content of the first message in the second message based on the first and second hash values.

3. The method (10) of claim 1, wherein the first hash value is part of the first warning message and wherein the second hash value is part of the second warning message, or wherein the first hash value is calculated based on a specific content of the first warning message and wherein the second hash value is calculated based on a specific content of the second warning message.

4. The method (10) of one of the claims 1 to 3, wherein the specific content relates to specific content fields in the first and second warning messages.

5. The method (10) of one of the claims 1 to 4, wherein the first and second warning messages comprise different message identifications.

6. The method (10) of one of the claims 1 to 5, further comprising issuing the user notification about the second warning message if the first hash value differs from the second hash value.

7. The method (10) of one of the claims 1 to 6, wherein the first warning message further comprises network validity information and wherein the refraining is performed from other networks listed in the network validity information.

8. The method (10) of one of the claims 1 to 7, wherein the first warning message and/or the second warning message further comprises repetition allowance information and wherein the refraining (18) is not performed if repetition is allowed.

9. A method (20) for a network node and for generating a warning message, the method (20) comprising
composing (21) the warning message based on a plurality of pieces of content information;
calculating (22) a hash value based at least on a subset of the plurality of pieces of content information;
adding (23) the hash value to the message; and
forwarding (24) the message to warning message recipients,
further comprising adding to the warning message validity period information.

10. The method (20) of claim 9, further comprising adding to the warning message one or more elements of the group of message type information, network validity information, a unique disaster identification, and repetition allowance information.

11. The method (20) of one of the claims 9 or 10, wherein the composing further comprises using a language independent translation model to align message content for different countries.

12. A computer program having a program code for performing one of the methods (10; 20) of one of the claims 1 to 11, when the computer program is executed on a computer, a processor, or a programmable hardware component.

13. An apparatus (30) for user equipment (300) of a mobile communication system (500), the apparatus (30) comprising
one or more interfaces (32) configured to communicate in the mobile communication system; and
one or more processing devices (34) configured to perform one of the methods (10) of one of the claims 1 to 8.

14. An apparatus (40) for a network node (400), the apparatus (40) comprising
one or more interfaces (42) configured to communicate in a network; and
one or more processing devices (44) configured to perform one of the methods (20) of one of the claims 9 to 11.

15. A mobile communication system (500) comprising user equipment (300) with an apparatus (30) according to claim 13 and a network node (400) with an apparatus (40) according to claim 14.

## Patentansprüche

1. Ein Verfahren (10) für ein Benutzerendgerät, UE (300), eines Mobilkommunikationssystems (500) und zum Detektieren von doppelten und/oder redundanten Warnmeldungen, das Verfahren (10) umfassend
Empfangen (11) einer ersten Warnmeldung unter Verwendung des Mobilkommunikationssystems (500);
Bestimmen (12) eines ersten Hash-Werts für die erste Warnmeldung, wobei der erste Hash-Wert basierend auf einem spezifischen Meldungsinhalt der ersten Meldung bestimmt wird;
Speichern (13) von Informationen über den ersten Hash-Wert für die erste Warnmeldung in einem Speicher;
Ausgeben (14) einer Benutzerbenachrichtigung über die erste Warnmeldung;
Empfangen (15) einer zweiten Warnmeldung unter Verwendung des Mobilkommunikationssystems (500) oder eines anderen Mobilkommunikationssystems;
Bestimmen (16) eines zweiten Hash-Werts für die zweite Warnmeldung, wobei der zweite Hash-Wert basierend auf einem spezifischen Meldungsinhalt der zweiten Warnmeldung bestimmt wird;
Speichern (17) von Informationen über den zweiten Hash-Wert für die zweite Warnmeldung;
Unterlassen (18) des Ausgebens einer Benutzerbenachrichtigung über die zweite Warnmeldung, wenn der zweite Hash-Wert gleich dem ersten Hash-Wert ist,
wobei die erste Warnmeldung ferner Gültigkeitsperiodeninformationen umfasst und wobei das Unterlassen (18) während der Gültigkeitsperiode ausgeführt wird.

2. Das Verfahren (10) gemäß Anspruch 1, ferner umfassend ein Detektieren eines duplizierten Inhalts der ersten Meldung in der zweiten Meldung basierend auf dem ersten und dem zweiten Hash-Wert.

3. Das Verfahren (10) gemäß Anspruch 1, wobei der erste Hash-Wert Teil der ersten Warnmeldung ist und wobei der zweite Hash-Wert Teil der zweiten Warnmeldung ist oder wobei der erste Hash-Wert basierend auf einem spezifischen Inhalt der ersten Warnmeldung berechnet wird und wobei der zweite Hash-Wert basierend auf einem spezifischen Inhalt der zweiten Warnmeldung berechnet wird.

4. Das Verfahren (10) gemäß einem der Ansprüche 1 bis 3, wobei sich der spezifische Inhalt auf spezifische Inhaltsfelder in der ersten und der zweiten Warnmeldung bezieht.

5. Das Verfahren (10) gemäß einem der Ansprüche 1 bis 4, wobei die erste und die zweite Warnmeldung unterschiedliche Meldungsidentifikationen umfassen.

6. Das Verfahren (10) gemäß einem der Ansprüche 1 bis 5, ferner umfassend ein Ausgeben der Benutzerbenachrichtigung über die zweite Warnmeldung, wenn sich der erste Hash-Wert von dem zweiten Hash-Wert unterscheidet.

7. Das Verfahren (10) gemäß einem der Ansprüche 1 bis 6, wobei die erste Warnmeldung ferner Netzwerkgültigkeitsinformationen umfasst und wobei das Unterlassen von anderen Netzwerken ausgeführt wird, die in den Netzwerkgültigkeitsinformationen aufgelistet sind.

8. Das Verfahren (10) gemäß einem der Ansprüche 1 bis 7, wobei die erste Warnmeldung und/oder die zweite Warnmeldung ferner Wiederholungserlaubnisinformationen umfassen und wobei das Unterlassen (18) nicht ausgeführt wird, wenn eine Wiederholung erlaubt ist.

9. Ein Verfahren (20) für einen Netzwerkknoten und zum Erzeugen einer Warnmeldung, das Verfahren (20) umfassend
Zusammensetzen (21) der Warnmeldung basierend auf einer Mehrzahl von Teilen von Inhaltsinformationen;
Berechnen (22) eines Hash-Werts basierend zumindest auf einem Teilsatz der Mehrzahl von Teilen von Inhaltsinformationen;
Hinzufügen (23) des Hash-Werts zu der Meldung; und
Weiterleiten (24) der Meldung an Warnmeldungsempfänger,
ferner umfassend ein Hinzufügen von Gültigkeitsperiodeninformationen zu der Warnmeldung.

10. Das Verfahren (20) gemäß Anspruch 9, ferner umfassend ein Hinzufügen zu der Warnmeldung von einem oder mehreren Elementen aus der Gruppe von Meldungstypinformationen, Netzwerkgültigkeitsinformationen, einer eindeutigen Notfallidentifikation und Wiederholungserlaubnisinformationen.

11. Das Verfahren (20) gemäß einem der Ansprüche 9 oder 10, wobei das Zusammensetzen ferner ein Verwenden eines sprachunabhängigen Übersetzungsmodells umfasst, um Meldungsinhalt für unterschiedliche Länder abzugleichen.

12. Ein Computerprogramm mit einem Programmcode zum Durchführen eines der Verfahren (10; 20) gemäß einem der Ansprüche 1 bis 11, wenn das Computerprogramm auf einem Computer, einem Prozessor oder einer programmierbaren Hardwarekomponente ausgeführt wird.

13. Eine Vorrichtung (30) für ein Benutzerendgerät (300) eines Mobilkommunikationssystems (500), die Vorrichtung (30) umfassend
eine oder mehrere Schnittstellen (32), die ausgebildet sind, um in dem Mobilkommunikationssystem zu kommunizieren; und
eine oder mehrere Verarbeitungsvorrichtungen (34), die ausgebildet sind, um eines der Verfahren (10) gemäß einem der Ansprüche 1 bis 8 durchzuführen.

14. Eine Vorrichtung (40) für einen Netzwerkknoten (400), die Vorrichtung (40) umfassend
eine oder mehrere Schnittstellen (42), die ausgebildet sind, um in einem Netzwerk zu kommunizieren; und
eine oder mehrere Verarbeitungsvorrichtungen (44), die ausgebildet sind, um eines der Verfahren (20) gemäß einem der Ansprüche 9 bis 11 durchzuführen.

15. Ein Mobilkommunikationssystem (500), umfassend ein Benutzerendgerät (300) mit einer Vorrichtung (30) gemäß Anspruch 13 und einen Netzwerkknoten (400) mit einer Vorrichtung (40) gemäß Anspruch 14.

## Revendications

1. Procédé (10) pour un équipement utilisateur, UE (300), d'un système de communication mobile (500) et pour détecter des messages d'avertissement en double et/ou redondants, le procédé (10) comprenant le fait de
recevoir (11) un premier message d'avertissement en utilisant le système de communication mobile (500);
déterminer (12) une première valeur de hachage pour le premier message d'avertissement, dans lequel la première valeur de hachage est déterminée sur la base d'un contenu de message spécifique du premier message ;
stocker (13) pour le premier message d'avertissement des informations relatives à la première valeur de hachage dans une mémoire ;
émettre (14) une notification d'utilisateur relative au premier message d'avertissement ;
recevoir (15) un deuxième message d'avertissement en utilisant le système de communication mobile (500) ou un autre système de communication mobile ;
déterminer (16) une deuxième valeur de hachage pour le deuxième message d'avertissement, dans lequel la deuxième valeur de hachage est déterminée sur la base d'un contenu de message spécifique du deuxième message d'avertissement ;
stocker (17) pour le deuxième message d'avertissement des informations relatives à la deuxième valeur de hachage ;
s'abstenir (18) d'émettre une notification d'utilisateur relative au deuxième message d'avertissement si la deuxième valeur de hachage est égale à la première valeur de hachage,
dans lequel le premier message d'avertissement comprend en outre des informations de période de validité et dans lequel l'abstention (18) est effectuée pendant la période de validité.

2. Procédé (10) selon la revendication 1, comprenant en outre le fait de détecter un contenu dupliqué du premier message dans le deuxième message sur la base des première et deuxième valeurs de hachage.

3. Procédé (10) selon la revendication 1, dans lequel la première valeur de hachage fait partie du premier message d'avertissement et dans lequel la deuxième valeur de hachage fait partie du deuxième message d'avertissement, ou dans lequel la première valeur de hachage est calculée sur la base d'un contenu spécifique du premier message d'avertissement et dans lequel la deuxième valeur de hachage est calculée sur la base d'un contenu spécifique du deuxième message d'avertissement.

4. Procédé (10) selon l'une des revendications 1 à 3, dans lequel le contenu spécifique se rapporte à des champs de contenu spécifiques dans les premier et deuxième messages d'avertissement.

5. Procédé (10) selon l'une des revendications 1 à 4, dans lequel les premier et deuxième messages d'avertissement comprennent des identifications de message différentes.

6. Procédé (10) selon l'une des revendications 1 à 5, comprenant en outre le fait d'émettre la notification d'utilisateur relative au deuxième message d'avertissement si la première valeur de hachage diffère de la deuxième valeur de hachage.

7. Procédé (10) selon l'une des revendications 1 à 6, dans lequel le premier message d'avertissement comprend en outre des informations de validité de réseau et dans lequel l'abstention est effectuée à partir d'autres réseaux répertoriés dans les informations de validité de réseau.

8. Procédé (10) selon l'une des revendications 1 à 7, dans lequel le premier message d'avertissement et/ou le deuxième message d'avertissement comprennent en outre des informations d'autorisation de répétition et dans lequel l'abstention (18) n'est pas effectuée si la répétition est autorisée.

9. Procédé (20) pour un nœud de réseau et pour générer un message d'avertissement, le procédé (20) comprenant le fait de
composer (21) le message d'avertissement sur la base d'une pluralité d'éléments d'informations de contenu ;
calculer (22) une valeur de hachage sur la base d'au moins un sous-ensemble de la pluralité d'éléments d'informations de contenu ;
ajouter (23) la valeur de hachage au message ; et
transmettre (24) le message à des destinataires de messages d'avertissement,
comprenant en outre le fait d'ajouter au message d'avertissement des informations de période de validité.

10. Procédé (20) selon la revendication 9, comprenant en outre le fait d'ajouter au message d'avertissement un ou plusieurs éléments du groupe d'informations de type de message, d'informations de validité de réseau, d'une identification de catastrophe unique et d'informations d'autorisation de répétition.

11. Procédé (20) selon l'une des revendications 9 ou 10, dans lequel la composition comprend en outre le fait d'utiliser un modèle de traduction indépendant de la langue pour aligner un contenu de message pour différents pays.

12. Programme informatique ayant un code de programme pour exécuter l'un des procédés (10; 20) selon l'une des revendications 1 à 11, lorsque le programme informatique est exécuté sur un ordinateur, un processeur ou un composant matériel programmable.

13. Appareil (30) pour un équipement utilisateur (300) d'un système de communication mobile (500), l'appareil (30) comprenant
une ou plusieurs interfaces (32) configurées pour communiquer dans le système de communication mobile ; et
un ou plusieurs dispositifs de traitement (34) configurés pour exécuter l'un des procédés (10) selon l'une des revendications 1 à 8.

14. Appareil (40) pour un nœud de réseau (400), l'appareil (40) comprenant
une ou plusieurs interfaces (42) configurées pour communiquer dans un réseau ; et
un ou plusieurs dispositifs de traitement (44) configurés pour exécuter l'un des procédés (20) selon l'une des revendications 9 à 11.

15. Système de communication mobile (500) comprenant un équipement utilisateur (300) avec un appareil (30) selon la revendication 13 et un nœud de réseau (400) avec un appareil (40) selon la revendication 14.
